# EUROPEAN PATENT SPECIFICATION

(11) **EP 4 540 799 B1**
(45) Date of publication and mention of the grant of the patent: **22.04.2026**
(21) Application number: 23733214.3
(22) Date of filing: 05.06.2023
(51) Int. Cl.: H02J 7/00, E05B 47/02, H02J 1/08, E05B 47/00, G07C 9/00

(54) **ELECTRONIC LOCK COMPRISING A BOOST CONVERTER FOR SELECTIVELY INCREASING A VOLTAGE**
ELEKTRONISCHES SCHLOSS MIT HOCHSETZSTELLER ZUR SELEKTIVEN ERHÖHUNG EINER SPANNUNG
VERROU ÉLECTRONIQUE COMPRENANT UN CONVERTISSEUR ÉLÉVATEUR POUR AUGMENTER SÉLECTIVEMENT UNE TENSION

(30) Priority: 17.06.2022 SE 2250740
(43) Date of publication of application: 23.04.2025
(73) Proprietor: ASSA ABLOY AB, 107 23 Stockholm (SE)
(72) Inventor: MOLLER, Per Kristian, 1512 Moss (NO); KOBA, Dawid, 55-020 Wegry (PL); FURUNES, Erling, 1410 Kolbotn (NO)
(74) Representative: Kransell & Wennborg KB
(86) International application number: PCT/EP2023/064943
(87) International publication number: WO 2023/241972

(56) References cited:
- CN-A- 107 724 804
- CN-A- 110 656 815
- US-A1- 2015 107 316
- US-A1- 2016 133 071
- US-A1- 2019 131 818
- US-A1- 2022 037 910
- US-B2- 9 799 154

## Description

### TECHNICAL FIELD

The present disclosure relates to the field of electronic locks and in particular to electronic lock comprising a boost converter for selectively increasing a voltage when needed.

### BACKGROUND

Locks have evolved from traditional mechanical locks to electronic locks. Electronic locks are becoming increasingly popular for several reasons, such as flexibility, control and auditing capabilities for access management.

Electronic keys for such electronic can be provided in different forms. For instance, electronic keys can be in the form of a key fob, a key card, a hybrid mechanical/electronic key or embedded in a smartphone. In some cases, communication between the electronic lock and electronic key occurs based on near-field communication, e.g. radio frequency identification (RFID) and/or near-field communication (NFC).

Electronic locks are beneficial in many ways, but one issue is the power supply. Battery power allows locks to be installed without wiring, which greatly improves the installation. However, the power consumption of the lock directly influences how often the battery needs to be replaced. The following prior art documents illustrate the relevant background technology: US 2015107316 A1, CN107724804 A and CN110656815 A.

### SUMMARY

One object is to reduce power consumption for electronic locks.

According to the invention, an electronic lock is provided as defined by the independent apparatus claim 1.

The electronic lock may further comprise a first diode connected between the battery holder and the first power bus, wherein an input of the boost converter is connected a battery holder side of the first diode and an output of the boost converter is connected to a first power bus side of the first diode.

The electronic lock may further comprise a first step-down converter configured to convert power from the first power bus to a lower third voltage power on a second power bus, wherein the first processor is powered from the second power bus.

The electronic lock may further comprise a switch between an output of the boost converter and the first power bus.

The lock case section may comprise the first step-down converter; wherein the communication section comprises a second step-down converter configured to convert power from the first power bus to a lower voltage power on a third power bus.

The lock case section may comprise a motor for unlocking or locking the electronic lock.

The electronic lock may further comprise an external power connector configured to receive power of about the second voltage to the first power bus.

The external power connector may be a universal serial bus, USB, connector.

According to the invention, a method for managing power supply of an electronic lock is provided as defined by the independent method claim 9.

The method may further comprise: deactivating the boost converter.

According to the invention, a computer program as defined by the independent claim 11 and a computer readable means defined by the independent claim 12 storing the computer program defined by claim 11 are provided.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig1 is a schematic diagram showing an environment in which embodiments presented herein can be applied;
Fig 2 is a schematic circuit diagram illustrating the electronic lock of Fig 1 according to some embodiments;
Fig 3 is a flow chart illustrating embodiments of methods for managing power supply of the electronic lock of Fig 1; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein variations in voltage requirements of components of an electronic lock are exploited in order to only provide higher voltage power when this is required. At other times, only lower voltage power is provided. This is achieved using a boost converter that is activated when higher voltage is needed.

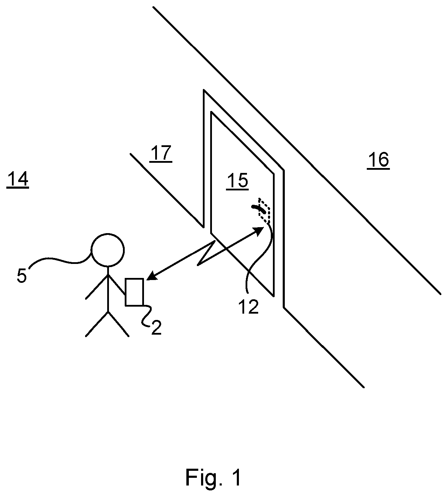

Fig 1 is a schematic diagram showing an environment in which embodiments presented herein can be applied. Access to a physical space 16 is restricted by an openable physical barrier 15 which is selectively unlockable. The physical barrier 15 stands between the restricted physical space 16 and an accessible physical space 14. Note that the accessible physical space 14 can be a restricted physical space in itself, but in relation to this physical barrier 15, the accessible physical space 14 is accessible. The barrier 15 can be a door, gate, hatch, cabinet door, window, safe door, etc. In order to control access to the physical space 16, by selectively unlocking the barrier 15, an electronic lock 12 is provided.

The electronic lock 12 is controllable to be in a locked state or in an unlocked state. When the electronic lock 12 is in an unlocked state, the barrier 15 can be opened and when the electronic lock 12 is in a locked state, the barrier 15 cannot be opened. In this way, access to a restricted physical space 16 is controlled by the electronic lock 12.

A user 5 carries an electronic key 2. The electronic key 2 can be in any suitable format that allows the electronic key 2 to communicate with the electronic lock 12, enabling the electronic lock 12 to evaluate whether to grant access. For instance, the electronic key 2 can be in the form of a key fob, a key card, a hybrid mechanical/electronic key or embedded in a smartphone. It is to be noted that, while only one electronic key 2 and user 5 are shown in Fig 1, there can be any suitable number of users with respective electronic keys.

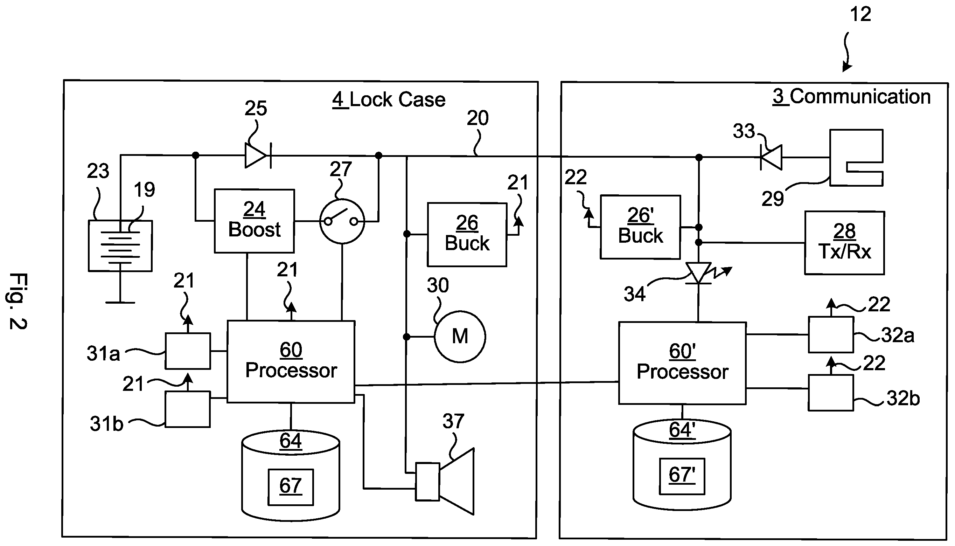

Fig 2 is a schematic circuit diagram illustrating the electronic lock 12 of Fig 1 according to some embodiments.

A battery holder 23 is configured to hold at least one battery 19. The at least one battery 19 supplies electric power to the electronic lock. Specifically, the at least one battery first supplies power of a first voltage (the present output voltage of the at least one battery 19) to a first power bus 20. The battery holder 23 can be dimensioned in any suitable way in terms of how many batteries and what type of battery/batteries should be inserted. For instance, the battery holder can be configured to hold three AA batteries, nominally at 1.5 V each, which, when connected serially, provides power at a nominal power of 4.5 V. However, in practice the voltage can vary significantly e.g. between 2.4 V and 4.7 V. In another embodiment, the battery holder is configured to hold a single lithium battery, in which case the voltage is about 3 V.

According to embodiments presented herein, the voltage on the first power bus 20 is controlled to vary over time depending on voltage requirements of currently active components of the electronic lock 12. Specifically, when a higher voltage is needed (e.g. due to a transceiver component being active), a boost converter 24 is employed to increase the voltage on the first power bus 20. Hence, the boost converter 24 is configured to selectively increase a voltage of the first power bus 20 from the first (lower) voltage to a second (higher) voltage. Hence, the second voltage is greater than the first voltage.

A first processor 60 is connected to the boost converter 24. The first processor 60 is provided using any combination of one or more of a suitable central processing unit (CPU), graphics processing unit (GPU), multiprocessor, microcontroller unit (MCU), digital signal processor (DSP), etc., capable of executing software instructions 67 stored in a memory 64, which can thus be a computer program product. The first processor 60 could alternatively be implemented using an application specific integrated circuit (ASIC), field programmable gate array (FPGA), etc.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory. Optionally, the memory 64 is physically combined with the first processor 60, e.g. as an MCU.

Optionally, a first step-down converter 26 is provided to convert power from the first power bus 20 to a lower third voltage power on a second power bus 21. The first step-down converter 26 can be implemented e.g. as a buck converter or a linear voltage regulator. The first step-down converter 26 can in this way ensure that the voltage on the second power bus 21 is at a suitable low voltage to power e.g. the first processor 60, regardless of whether the voltage on the first power bus 20 is at the (lower) first voltage or (higher) second voltage. By reducing the voltage on the second power bus 21 compared to the first power bus 20, power consumption is reduced compared to if the first step-down converter 26 is not provided. In other words, in one embodiment, there is no step-down converter, whereby the first processor 60 and other components are powered using the voltage on the first power bus 20.

The voltage on the second power bus 21 can be set to any suitable voltage, e.g. 1.8 V. In addition to powering the first processor 60, the second power bus 21 can be used to power any other optional components 31a-b that can operate using the relatively low third voltage of the second power bus 21. The first step-down converter 26 can be constantly active to ensure that the second power bus 21 supplies power to components that need it, e.g. the first processor 60, regardless of whether the boost converter 24 is active or not.

When the first processor 60 determines that there is a need for increased voltage, the first processor triggers the boost converter 24 to activate, to thereby increase a voltage on the first power bus 20. A first diode 25 is optionally connected between the battery holder 23 (and its battery/batteries 19) and the first power bus 20. An input of the boost converter 24 is connected a battery holder side (the left side in Fig 2) of the first diode 25 and an output of the boost converter 24 is connected to a first power bus side (the right side in Fig 2) of the first diode 25. In this way, the higher voltage of the output of the boost converter 24 is prevented from short-circuiting and reaching the input of the boost converter 24 when active. Still, power can flow from the batteries 19 via the first diode 25 to the first power bus 20 when the boost converter 24 is inactive.

Optionally, a switch 27 is provided between an output of the boost converter 24 and the first power bus 20 to reduce leakage into the boost converter 24 when the boost converter 24 is inactive. In this case, when the boost converter 24 is inactive, the switch 27 is open (i.e. non-conductive) and when the boost converter 24 is active, the switch 27 is closed (i.e. conductive). The switch 27 can be implemented as a transistor.

When the boost converter is active 24, the second (higher) voltage, e.g. around 5 V, is provided to the first power bus 20. The second voltage can be used to power a motor (for unlocking and/or locking the electronic lock 12, e.g. by retracting/extending a locking bolt from/into a striking plate). The motor 30 is controllable by the first processor 60 to implement the unlocking/locking of the electronic lock 12. The second voltage can also be used to power a beeper 37.

The electronic lock 12 is split onto a lock case section 4 and a communication section 3. In this way, the lock case section 4 can be provided in a location that is protected from the outside, e.g. inside the barrier 15, while the communication section 3 can be provided with external exposure for communicating with the electronic key 2. In such an embodiment, the components mentioned above are all part of the lock case section 4. The electronic lock 12 is then configured to transfer power from the lock case section 4 to the communication section 3 over the first power bus 20. There can also be a ground connector (not shown). Alternatively, instead of splitting components between the lock case section 4 and the communication section 3, the electronic lock 12 is contained within a single housing.

Looking now to the communication section 3, this comprises a near-field communication transceiver 28 for communicating with the electronic key 2. The near-field communication transceiver 28 can e.g. be used for near-field communication according to the radio frequency identification (RFID) specifications and/or near-field communication (NFC) specifications. The near-field communication transceiver requires the second (higher) voltage for proper operation.

The communication section 3 further comprises a second processor 60'. The second processor 60' has a communication path to the first processor 60. The second processor 60' is provided using any combination of one or more of a suitable CPU, GPU, multiprocessor, MCU, DSP, etc., capable of executing software instructions 67' stored in a second memory 64', which can thus be a computer program product. The second processor 60' could alternatively be implemented using an application specific integrated circuit (ASIC), field programmable gate array (FPGA), etc.

The second memory 64' can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory. Optionally, the memory 64' is physically combined with the second processor 60', e.g. as an MCU.

The second processor 60' determines when the near-field communication transceiver 28 needs to be activated. When the near-field communication transceiver 28 needs to be activated, the second processor 60' transmits an activation signal indicating a need for increased voltage to the first processor 60. The first processor 60 activates the boost converter 24, resulting in the second (higher) voltage on the first power bus 20. Since the first power bus 20 is connected to the transceiver 28, the transceiver 28 can operate properly using the second voltage. Optionally, a light-emitting diode (LED) 34 is also powered using the second voltage.

In one embodiment, in addition to the lock case section 4 comprising the first step-down converter 26; the communication section 3 comprises a corresponding second step-down converter 26'. The second step-down converter 26' is also configured to convert power from the first power bus 20 (but on the communication section 3 side) to the lower third voltage power, here provided on a third power bus 22. The second step-down converter 26' can be implemented e.g. as a buck converter or a linear voltage regulator. In this way, only the first power bus 20 needs to be common between the lock case section 4 and the communication section; there is no need for a second power transfer connection. The third voltage power is used to power the second processor 60' and other optional components 32a-b of the communication section 3.

In one embodiment, instead of providing a second step-down converter 26', the second power bus 21 is provided, via a connection (not shown) from the lock case section 4 to the communication section 3. In this way, the communication section 3 does not need its own step-down converter to supply the third voltage power.

Optionally, the communication section 3 comprises an external power connector 29 configured to receive power, at about the second voltage ( e.g. the second voltage +-10 %) to the first power bus 20. The external power connector 29 is a DC (Direct Current) connector and can e.g. be a universal serial bus (USB) connector, allowing universally available USB cables to be used to supply power to the electronic lock 12 if the battery/batteries 19 are out of power. There is optionally a second diode 33 provided between the first power bus 20 and the external power connector 29 to prevent power from flowing from the first power bus 20 to the external power connector 29 and any device thereto.

Optionally, the components of the lock case section 4 are provided on the inside of the door, or even in a secured case on the outside of the door. As explained above, the components of both the lock case section 4 and the communication section can optionally be combined within a single housing.

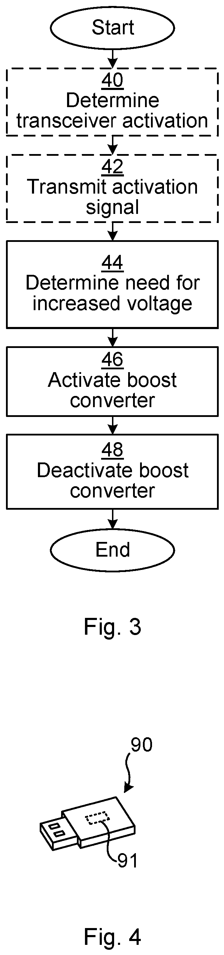

Fig 3 is a flow chart illustrating embodiments of methods for managing power supply of the electronic lock of Fig 1. As explained above, the electronic lock 12 comprises a first power bus 20; a battery holder 23 configured to hold at least one battery 19 to thereby supply power to the first power bus 20 of a first voltage; and a boost converter 24 configured to selectively increase a voltage of the first power bus 20 to a second voltage.

In a *determine transceiver activation* step 40, the electronic lock 12 determines that the near-field communication transceiver 28 needs to be activated. This can be based on determining intent of a person to unlock the electronic lock, e.g. by detecting presence of an electronic key 2, detecting presence of a person nearby the electronic lock 12, or in any other suitable way to determine intent. This step is performed in the second processor 60'.

In a *transmit activation signal* step 42, the second processor 60' of the electronic lock 12 transmits an activation signal indicating a need for increased voltage to the first processor 60. The electronic lock 12 comprises a lock case section 4 and the communication section 3, the activation signal is thus transmitted from the second processor 60' of the communication section 3 to the first processor 60 of the lock case section 4.

In a *determine need for increased voltage* step 44, the electronic lock 12 determines a need for increased voltage. This is based on the first processor 60 receiving the activation signal from the second processor 60'. Alternatively, a component that needs the increased voltage can signal this need directly in a signal to the first processor 60.

In an *activate boost converter* step 46, the electronic lock 12 triggers the boost converter 24 to activate to thereby increase a voltage on the first power bus 20.

In an optional *deactivate boost converter* step 48, the electronic lock 12 deactivates the boost converter 24. This can occur e.g. after a preconfigured time after activation, or based on an input signal, e.g. based on the motor 30 having been employed for unlocking the electronic lock 12 by retracting a locking bolt.

Fig 4 shows one example of a computer program product 90 comprising computer readable means. On this computer readable means, a computer program 91 can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program products 64, 64' of Fig 2. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

Using embodiments presented herein, it is exploited that only some of the components of the electronic lock 12 require a higher second voltage (e.g. of about 5 V) while the other components can function equally well with a lower voltage (e.g. of about 1.8V, denoted the third voltage above). Only when the second voltage is needed is this supplied on the first power bus, using the boost converter. The rest of the time, which is a great majority of the time, only the lower voltage is supplied, thereby significantly reducing power consumption of the electronic lock 12. This increases the time between occurrences when the batteries need to be replaced or recharged. The electronic lock 12 is thus provided with a power supply that varies over time depending on currently active requirements. It is to be noted that no separate higher-voltage power source is needed.

The higher voltage requirements are thus satisfied, while power consumption is kept low when the lock is not activated, effectively reducing overall power consumption for the electronic lock. At the same time cost and complexity are kept low.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art within the scope of the invention which is solely defined by the appended claims.

## Claims

1. An electronic lock (12) comprising:
a first power bus (20);
a battery holder (23) configured to hold at least one battery (19) to thereby supply power of a first voltage to the first power bus (20);
a boost converter (24) configured to selectively increase a voltage of the first power bus (20) from the first voltage to a second voltage;
a first processor (60) connected to the boost converter (24);
a first memory (64) configured to store instructions (67) that, when executed by the first processor (60), cause the electronic lock (12) to:
determine a need for increased voltage on the first power bus (20); and
trigger the boost converter (24) to activate to thereby increase the voltage on the first power bus (20)
wherein the electronic lock (12) further comprises a lock case section (4) and a communication section (3), wherein the electronic lock (12) is configured to transfer power from the lock case section (4) to the communication section (3) over the first power bus (20);
wherein the lock case section (4) comprises the battery holder (23), the boost converter (24) and the first processor (60); and
the communication section (3) comprises a near-field communication transceiver (28), a second processor (60'), and a second memory (64') configured to store instructions (67') that, when executed by the second processor, cause the electronic lock (12) to:
determine that the near-field communication transceiver (28) is to be activated; and
transmit an activation signal indicating to the first processor (60) that an increased voltage is required.

2. The electronic lock (12) according to claim 1, further comprising a first diode (25) connected between the battery holder (23) and the first power bus (20), wherein an input of the boost converter (24) is connected to a battery holder side of the first diode (25) and an output of the boost converter (24) is connected to a first power bus side of the first diode (25).

3. The electronic lock (12) according to any one of the preceding claims, further comprising a first step-down converter (26) configured to convert power from the first power bus (20) to a lower third voltage on a second power bus (21), wherein the first processor (60) is configured to be powered from the second power bus (21).

4. The electronic lock (12) according to any one of the preceding claims, further comprising a switch (27) arranged between an output of the boost converter (24) and the first power bus (20).

5. The electronic lock (12) according to any one of the preceding claims, wherein the lock case section (4) comprises the first step-down converter (26); wherein the communication section (3) comprises a second step-down converter (26') configured to convert power from the first power bus (20) to a lower voltage on a third power bus (22).

6. The electronic lock (12) according to any one of the preceding claims, wherein the lock case section (2) comprises a motor (30) configured to lock or unlock the electronic lock (12).

7. The electronic lock (12) according to any one of the preceding claims, further comprising an external power connector (29) configured to receive power of about the second voltage to the first power bus (20).

8. The electronic lock (12) according to claim 6, wherein the external power connector (29) is a universal serial bus, USB, connector.

9. A method for managing power supply of an electronic lock (12) comprising: a first power bus (20); a battery holder (23) configured to hold at least one battery (19) to thereby supply power to the first power bus (20) of a first voltage; and a boost converter (24) configured to selectively increase a voltage of the first power bus (20) to a second voltage, a lock case section(4) and a communication section(3), wherein the lock section comprises a battery holder (23), the boost converter (24), a first processor (60)connected to the boost converter(24)and a first memory (64) storing instructions executables by the first processor, wherein the communication section (3) comprises a near-field communication transceiver (28), a second processor(60'), and a second memory (67') storing instructions executable by the second processor (60'), the method comprising:
determining (44), by execution of the instructions in the first memory by the first processor, a need for increased voltage on the first power bus (20); and
triggering (46), by execution of the instructions in the first memory by the first processor, the boost converter (24) to activate to thereby increase the voltage on the first power bus (20);
wherein the electronic lock (12) transfers power from the lock case section (4) to the communication section (3) over the first power bus (20), wherein the method further comprises:
determining (40), by execution of the instructions in the second memory by the second processor, that the near-field communication transceiver (28) is to be activated; and
transmitting (42), by execution of the instructions in the second memory by the second processor, an activation signal to the first processor(60)that an increased voltage is required.

10. The method according to claim 9, further comprising:
deactivating (48) the boost converter (24).

11. A computer program (67, 91) for managing power supply of the electronic lock (12) according to claim 1 comprising code that when executed by the electronic lock performs the steps of the method defined by claim 9.

12. A computer readable means comprising non-transitory memory in which the computer program according to claim 11 is stored.

## Patentansprüche

1. Elektronisches Schloss (12), umfassend:
einen ersten Stromversorgungsbus (20);
einen Batteriehalter (23), der dafür konfiguriert ist, mindestens eine Batterie (19) zu halten, um dadurch dem ersten Stromversorgungsbus (20) Strom mit einer ersten Spannung zu versorgen;
einen Aufwärtswandler (24), der dafür konfiguriert ist, eine Spannung des ersten Stromversorgungsbusses (20) selektiv von der ersten Spannung auf eine zweite Spannung zu erhöhen;
einen ersten Prozessor (60), der mit dem Aufwärtswandler (24) verbunden ist;
einen ersten Speicher (64), der dafür konfiguriert ist, Anweisungen (67) zu speichern, die, wenn sie durch den ersten Prozessor (60) ausgeführt werden, das elektronische Schloss (12) dazu veranlassen:
einen Bedarf an erhöhter Spannung auf dem ersten Stromversorgungsbus (20) zu bestimmen; und
den Aufwärtswandler (24) zum Aktievieren zu triggern, um dadurch die Spannung auf dem ersten Stromversorgungsbus (20) zu erhöhen,
wobei das elektronische Schloss (12) weiter einen Schlossgehäuseabschnitt (4) und einen Kommunikationsabschnitt (3) umfasst, wobei das elektronische Schloss (12) dafür konfiguriert ist, Strom vom Schlossgehäuseabschnitt (4) über den ersten Stromversorgungsbus (20) zum Kommunikationsabschnitt (3) zu übertragen;
wobei der Schlossgehäuseabschnitt (4) den Batteriehalter (23), den Aufwärtswandler (24) und den ersten Prozessor (60) umfasst; und
der Kommunikationsabschnitt (3) eine umfasst n Nahfeldkommunikations-Sendeempfänger (28), einen zweiten Prozessor (60') und einen zweiten Speicher (64'), der dafür konfiguriert ist, Anweisungen (67') zu speichern, die, wenn sie durch den zweiten Prozessor ausgeführt werden, das elektronische Schloss (12) dazu veranlassen:
zu bestimmen, dass der Nahfeldkommunikations-Sendeempfänger (28) aktiviert werden soll; und
ein Aktivierungssignal zu endens, das den ersten Prozessor (60) darauf hinweist, dass eine erhöhte Spannung erforderlich ist.

2. Elektronisches Schloss (12) nach Anspruch 1, weiter umfassend eine erste Diode (25), die zwischen dem Batteriehalter (23) und dem ersten Stromversorgungsbus (20) verbunden ist, wobei ein Eingang des Aufwärtswandlers (24) mit einer Batteriehalterseite der ersten Diode (25) verbunden ist und ein Ausgang des Aufwärtswandlers (24) mit der Stromversorgungsbusseite der ersten Diode (25) verbunden ist.

3. Elektronisches Schloss (12) nach einem der vorstehenden Ansprüche, weiter umfassend einen ersten Abwärtswandler (26), der dafür konfiguriert ist, Strom vom ersten Stromversorgungsbus (20) auf eine niedrigere dritte Spannung auf einem zweiten Stromversorgungsbus (21) zu wandeln, wobei der erste Prozessor (60) dafür konfiguriert ist, vom zweiten Stromversorgungsbus (21) mit Strom versorgt zu werden.

4. Elektronisches Schloss (12) nach einem der vorstehenden Ansprüche, weiter umfassend einen Schalter (27), der zwischen einem Ausgang des Aufwärtswandlers (24) und dem ersten Stromversorgungsbus (20) angeordnet ist.

5. Elektronisches Schloss (12) nach einem der vorstehenden Ansprüche, wobei der Schlossgehäuseabschnitt (4) den ersten Abwärtswandler (26) umfasst; wobei der Kommunikationsabschnitt (3) einen zweiten Abwärtswandler (26') umfasst, der dafür konfiguriert ist, Strom vom ersten Stromversorgungsbus (20) auf eine niedrigere Spannung auf einem dritten Stromversorgungsbus (22) zu wandeln.

6. Elektronisches Schloss (12) nach einem der vorstehenden Ansprüche, wobei der Schlossgehäuseabschnitt (2) einen Motor (30) umfasst, der dafür konfiguriert ist, das elektronische Schloss (12) zu verriegeln oder zu entriegeln.

7. Elektronisches Schloss (12) nach einem der vorstehenden Ansprüche, weiter umfassend einen externen Stromversorgungsverbinder (29), der dafür konfiguriert ist, eine Spannung von etwa der zweiten Spannung auf dem ersten Stromversorgungsbus (20) zu empfangen.

8. Elektronisches Schloss (12) nach Anspruch 6, wobei der externe Stromanschluss (29) ein universeller serieller Bus-, USB-, Anschluss ist.

9. Verfahren zum Verwalten der Stromversorgung eines elektronischen Schlosses (12), umfassend: einen ersten Stromversorgungsbus (20); einen Batteriehalter (23), der dafür konfiguriert ist, mindestens eine Batterie (19) zu halten, um dadurch dem ersten Stromversorgungsbus (20) Strom mit einer ersten Spannung zu versorgen; und einen Aufwärtswandler (24), der dafür konfiguriert ist, eine Spannung des ersten Stromversorgungsbusses (20) selektiv auf eine zweite Spannung zu erhöhen, einen Schlossgehäuseabschnitt (4) und einen Kommunikationsabschnitt (3), wobei der Schlossgehäuseabschnitt einen Batteriehalter (23), den Aufwärtswandler (24), einen ersten Prozessor (60), der mit dem Aufwärtswandler (24) verbunden ist, und einen ersten Speicher (64) umfasst, der Anweisungen speichert, die durch den ersten Prozessor ausführbar sind, wobei der Kommunikationsabschnitt (3) einen Nahfeldkommunikations-Sendeempfänger (28), einen zweiten Prozessor (60') und einen zweiten Speicher (67') umfasst, der Anweisungen speichert, die durch den zweiten Prozessor (60') ausführbar sind,
wobei das Verfahren umfasst:
Bestimmen (44) eines Bedarfs an erhöhter Spannung auf dem ersten Stromversorgungsbus (20) durch Ausführung der Anweisungen im ersten Speicher durch den ersten Prozessor; und
Triggern (46) durch Ausführung der Anweisungen im ersten Speicher durch den ersten Prozessor, dass der Aufwärtswandler (24) aktiviert wird, um dadurch die Spannung auf dem ersten Stromversorgungsbus (20) zu erhöhen;
wobei das elektronische Schloss (12) Strom vom Schlossgehäuseabschnitt (4) über den ersten Stromversorgungsbus (20) zum Kommunikationsabschnitt (3) überträgt,
wobei das Verfahren weiter umfasst:
Bestimmen (40) durch Ausführung der Anweisungen im zweiten Speicher durch den zweiten Prozessor, dass der Nahfeldkommunikations-Sendeempfänger (28) aktiviert werden soll; und
Senden (42) eines Aktivierungssignals zum ersten Prozessor (60), dass eine erhöhte Spannung erforderlich ist, durch Ausführung der Anweisungen im zweiten Speicher durch den zweiten Prozessor.

10. Verfahren nach Anspruch 9, weiter umfassend:
Deaktivieren (48) des Aufwärtswandlers (24).

11. Computerprogramm (67, 91) zum Verwalten der Stromversorgung des elektronischen Schlosses (12) nach Anspruch 1, umfassend Code, der, wenn er durch das elektronische Schloss ausgeführt wird, die Schritte des Verfahrens nach Anspruch 9 durchführt.

12. Computerlesbares Mittel, umfassend nichtflüchtigen Speicher, in dem das Computerprogramm nach Anspruch 11 gespeichert ist.

## Revendications

1. Serrure électronique (12) comprenant :
un premier bus d'alimentation (20) ;
un porte-batterie (23) configuré pour contenir au moins une batterie (19) afin de fournir une alimentation d'une première tension au premier bus d'alimentation (20) ;
un convertisseur élévateur (24) configuré pour augmenter sélectivement la tension du premier bus d'alimentation (20) de la première tension à une deuxième tension ;
un premier processeur (60) connecté au convertisseur élévateur (24) ;
une première mémoire (64) configurée pour stocker des instructions (67) qui, lorsqu'elles sont exécutées par le premier processeur (60), amènent la serrure électronique (12) à :
déterminer un besoin d'augmentation de tension sur le premier bus d'alimentation (20) ; et
déclencher le convertisseur élévateur (24) pour l'activer afin d'augmenter ainsi la tension sur le premier bus d'alimentation (20)
dans laquelle la serrure électronique (12) comprend en outre une section de boîtier de serrure (4) et une section de communication (3), dans laquelle la serrure électronique (12) est configurée pour transférer l'alimentation de la section de boîtier de serrure (4) à la section de communication (3) via le premier bus d'alimentation (20) ;
dans lequel la section de boîtier de serrure (4) comprend le porte-batterie (23), le convertisseur élévateur (24) et le premier processeur (60) ; et
la section de communication (3) comprend un émetteur-récepteur de communication en champ proche (28), un deuxième processeur (60') et une deuxième mémoire (64') configurée pour stocker des instructions (67') qui, lorsqu'elles sont exécutées par le deuxième processeur, amènent la serrure électronique (12) à :
déterminer que l'émetteur-récepteur de communication en champ proche (28) doit être activé ; et
transmettre un signal d'activation indiquant au premier processeur (60) qu'une tension accrue est nécessaire.

2. Serrure électronique (12) selon la revendication 1, comprenant en outre une première diode (25) connectée entre le porte-batterie (23) et le premier bus d'alimentation (20), dans laquelle une entrée du convertisseur élévateur (24) est connectée au côté porte-batterie de la première diode (25) et une sortie du convertisseur élévateur (24) est connectée au côté premier bus d'alimentation de la première diode (25).

3. Serrure électronique (12) selon l'une quelconque des revendications précédentes, comprenant en outre un premier convertisseur abaisseur (26) configuré pour convertir la puissance du premier bus d'alimentation (20) en une tension inférieure d'un tiers sur un deuxième bus d'alimentation (21), dans lequel le premier processeur (60) est configuré pour être alimenté par le deuxième bus d'alimentation (21).

4. Serrure électronique (12) selon l'une quelconque des revendications précédentes, comprenant en outre un commutateur (27) disposé entre une sortie du convertisseur élévateur (24) et le premier bus d'alimentation (20).

5. Serrure électronique (12) selon l'une quelconque des revendications précédentes, dans laquelle la section du boîtier de serrure (4) comprend le premier convertisseur abaisseur (26) ; dans laquelle la section de communication (3) comprend un deuxième convertisseur abaisseur (26') configuré pour convertir la puissance du premier bus d'alimentation (20) en une tension inférieure sur un troisième bus d'alimentation (22).

6. Serrure électronique (12) selon l'une quelconque des revendications précédentes, dans laquelle la section du boîtier de serrure (2) comprend un moteur (30) configuré pour verrouiller ou déverrouiller la serrure électronique (12).

7. Serrure électronique (12) selon l'une quelconque des revendications précédentes, comprenant en outre un connecteur d'alimentation externe (29) configuré pour recevoir une alimentation d'environ la deuxième tension du premier bus d'alimentation (20).

8. Serrure électronique (12) selon la revendication 6, dans laquelle le connecteur d'alimentation externe (29) est un connecteur de bus série universel, USB.

9. Procédé de gestion de l'alimentation électrique d'une serrure électronique (12) comprenant : un premier bus d'alimentation (20) ; un porte-batterie (23) configuré pour contenir au moins une batterie (19) afin d'alimenter le premier bus d'alimentation (20) avec une première tension ; et un convertisseur élévateur (24) configuré pour augmenter sélectivement la tension du premier bus d'alimentation (20) à une deuxième tension ; une section de boîtier de serrure (4) et une section de communication (3), dans lequel la section de serrure comprend un porte-batterie (23), le convertisseur élévateur (24), un premier processeur (60) connecté au convertisseur élévateur (24) et une première mémoire (64) stockant des instructions exécutables par le premier processeur, dans lequel la section de communication (3) comprend un émetteur-récepteur de communication en champ proche (28), un deuxième processeur (60') et une deuxième mémoire (67') stockant les instructions exécutables par le deuxième processeur (60'),
le procédé comprenant :
la détermination (44), par l'exécution des instructions dans la première mémoire par le premier processeur, d'un besoin d'augmentation de tension sur le premier bus d'alimentation (20) ; et
le déclenchement (46), par l'exécution des instructions dans la première mémoire par le premier processeur, du convertisseur élévateur (24) pour l'activer afin d'augmenter ainsi la tension sur le premier bus d'alimentation (20) ;
dans lequel la serrure électronique (12) transfère l'énergie de la section du boîtier de serrure (4) à la section de communication (3) via le premier bus d'alimentation (20),
dans lequel le procédé comprend en outre :
la détermination (40) / par l'exécution des instructions dans la deuxième mémoire par le deuxième processeur, que l'émetteur-récepteur de communication en champ proche (28) doit être activé ; et
la transmission (42), par l'exécution des instructions dans la deuxième mémoire par le deuxième processeur, d'un signal d'activation au premier processeur (60) indiquant qu'une tension accrue est nécessaire.

10. Procédé selon la revendication 9, comprenant en outre :
la désactivation (48) du convertisseur élévateur (24).

11. Programme informatique (67, 91) pour la gestion de l'alimentation électrique de la serrure électronique (12) selon la revendication 1 comprenant un code qui, lorsqu'il est exécuté par la serrure électronique, effectue les étapes du procédé défini par la revendication 9.

12. Support lisible par ordinateur comprenant une mémoire non transitoire dans laquelle est stocké le programme informatique selon la revendication 11.
